# EUROPÄISCHE PATENTANMELDUNG

(11) **EP 4 198 479 A1**
(43) Veröffentlichungstag der Anmeldung: **21.06.2023**
(21) Anmeldenummer: 22209554.9
(22) Anmeldetag: 25.11.2022
(51) Int. Cl.: G01M 3/40

(54) **VORRICHTUNG UND SYSTEM ZUR DICHTIGKEITSPRÜFUNG EINES BEHÄLTERS SOWIE VERFAHREN HIERFÜR**

(30) Priorität: 15.12.2021 DE 102021133158
(71) Anmelder: Körber Pharma Inspection GmbH, 85570 Markt Schwaben (DE)
(72) Erfinder: Knülle, Dr. Matthias, 85617 Aßling (DE)
(74) Vertreter: Laufhütte, Dieter

(57) **Zusammenfassung**

Die vorliegende Erfindung betrifft eine Vorrichtung zur Dichtigkeitsprüfung eines Behälters, umfassend eine erste Elektrode, eine zweite Elektrode, die mit Abstand zu der ersten Elektrode angeordnet ist, so dass zwischen den Elektroden ein Raum zum Anordnen des Behälters vorgesehen ist, eine Spannungsversorgung, die dazu ausgelegt ist, eine Spannung zwischen der ersten Elektrode und der zweiten Elektrode anzulegen, und mindestens eine Analyseeinheit, die dazu ausgelegt ist, einen Strom- und/oder Spannungsverlauf zu analysieren, der sich bei einem Vorhandensein eines auf seine Dichtigkeit zu prüfenden Behälters zwischen der ersten Elektrode und der zweiten Elektrode einstellt, um auf Grundlage hiervon einen dichten bzw. undichten Behälter zu detektieren. Die Vorrichtung ist dadurch gekennzeichnet, dass die Spannungsversorgung dazu ausgelegt ist, eine Gleichspannung zwischen der ersten Elektrode und der zweiten Elektrode anzulegen, vorzugsweise eine Hochspannungs-Gleichspannung, die im Bereich von 500 V bis 50 kV, bevorzugterweise im Bereich von 10 kV bis 50 kV und ganz besonders bevorzugt im Bereich von 30 kV bis 50 kV liegt.

## Beschreibung

Die vorliegende Erfindung betrifft eine Vorrichtung und ein System zur Dichtigkeitsprüfung eines Behälters sowie ein Verfahren hierfür.

Dichtigkeitsprüfungen von Glas- und Kunststoffbehältern mit flüssigem Inhalt werden unter anderem mit elektrischen Feldern hoher Feldstärke (im Bereich von 250 bis 1500 V/m) durchgeführt. Die hierzu notwendigen Feldelektroden werden meistens so ausgeführt, dass ein inhomogenes Feld erzeugt wird, so dass lokal am Behälter die Feldstärken noch höhere Werte annehmen können.

Passiert ein undichter Behälter (=manchmal auch Container genannt) das E-Feld und liegt das Leck im Bereich hoher Feldstärke, so kommt es zu einer Änderung des Stromflusses bis hin zum Durchschlag zwischen den beiden Elektroden. Diese Änderung im Stromfluss wird gemessen und dient zum Nachweis einer undichten Stelle.

Aus dem Stand der Technik ist es bekannt, hierfür eine Wechselspannung zu verwenden, deren Frequenz typischerweise um ein Vielfaches höher als die Netzfrequenz ist.

Um sicherzustellen, dass ein Defekt unabhängig von seiner Position am Behälter über den gesamten Umfang des Behälters sicher gefunden wird, muss bei Wechselspannung die Frequenz so hoch liegen, dass jeder Ort auf dem typischerweise rotierenden Behälter mindestens einmal die volle Amplitude des Feldes sieht. Bei den heute üblichen Maschinengeschwindigkeiten reichen 50 Hz (Netzfrequenz) hierzu nicht aus. Die Frequenzen liegen typischerweise bei 500 Hz und darüber. Dies führt zu wesentlich höheren Verschiebungsströmen (bei gegebener Kapazität sind diese der Frequenz proportional).

Nachteilhaft an einer, auf Wechselspannung zurückgreifenden Dichtigkeitsprüfung, ist, dass zur Erzeugung der dabei verwendeten Spannung Transformatoren erforderlich sind, die in Bezug auf den erforderlichen Bauraum Platz beanspruchen und zudem kostspielig sind.

Die hohen Verschiebungsströme machen zudem den Einsatz von geschirmten Kabeln unmöglich, da sie das Isolator-Material auf Dauer (z.B. auf Grund der Wärmeentwicklung) zerstören würden. D.h. es werden nicht-geschirmte Leitungen zur Speisung der Elektroden eingesetzt, die entsprechend hohe Abstände zur Umgebung benötigen und sich erneut negativ auf den beanspruchten Bauraum auswirken.

Alle Isolatoren um das Kabel müssen zudem entsprechende Dicken aufweisen, um einen ausreichenden Schutz vor Durchschlag zu garantieren und die Verschiebungsströme ausreichend zu reduzieren. Ansonsten können Kriech- und Verschiebungsströme gegen Erd-Potential die Materialen zu sehr angreifen und auf Dauer zerstören. Die hierzu notwendigen Kunststoffteile müssen individuell gefertigt werden (hohe Kosten) und benötigen viel Raum.

Je nach Leitfähigkeit der in den Behältern befindlichen Flüssigkeit können auch dort Wechselströme auftreten. Insbesondere bei diesbezüglich sehr empfindlichen in den Behältern gelagert Flüssigkeiten wird dies als sehr nachteilig empfunden.

Ein weiterer Nachteil ist, dass bei angelegten AC-Spannungen der Sensor nur empfindlich ist, wenn der Betrag der Spannung ausreichend hoch ist. Im Bereich der Nulldurchgänge können keine Defekte am Behälter nachgewiesen werden. Ist für den Nachweis eine bestimmte Feldrichtung bevorzugt (dies ist im Allgemeinen bei den in der Regel verwendeten asymmetrischen inhomogenen Feldern der Fall) fehlt zeitlich zusätzlich eine komplette Halbwelle, so dass der Sensor nur während einem Teil der Messzeit die optimale Empfindlichkeit aufweist und in der Lage ist, eine Undichtigkeit zu detektieren.

Bei Dichtigkeitsprüfungen mit Wechselspannung werden auch Filter oder Messbrücken eingesetzt, die das Stromsignal - angepasst an die Frequenz der Wechselspannung - glätten, um über einfache Schwellwertmessungen undichte Behälter nachweisen zu können. Um auf diese Weise einen ausreichenden Messwert-Abstand zwischen dichten und undichten Behältern zu erhalten, müssen die Spannungsamplituden so hoch gewählt werden, damit es an den Undichtigkeiten in der Regel (nicht grundsätzlich) zu Blitzentladungen und somit zu hohen Stromanstiegen kommt.

Sollen komplexere Auswerteverfahren zum Einsatz kommen, so wird die Analyse der Daten dadurch erschwert, dass das Nutzsignal durch einen deutlichen Verschiebungsstrom, dessen Frequenz den Verlauf der AC-Spannung widerspiegelt, überlagert wird. Dieser "Untergrund" muss bestimmt und vom Messsignal abgezogen werden.

Beispielhafte Umsetzungen einer Detektion von Undichtigkeiten eines Behälters mithilfe von Wechselspannungen finden sich in der DE 19 548 177 A1 oder der US 4,243,932.

Es ist das Ziel der vorliegenden Erfindung die oben aufgeführten Nachteile zu überwinden oder zumindest abzumildern, was mit einer Vorrichtung, welche sämtliche Merkmale des Anspruchs 1 enthält, einem System nach dem Anspruch 7 bzw. einem Verfahren nach dem Anspruch 11 gelingt.

Erfindungsgemäß ist eine Vorrichtung zur Dichtigkeitsprüfung eines Behälters beansprucht, die eine erste Elektrode, eine zweite Elektrode, die mit Abstand zu der ersten Elektrode angeordnet ist, so dass zwischen den Elektroden ein Raum zum Anordnen des Behälters vorgesehen ist, eine Spannungsversorgung, die dazu ausgelegt ist, eine Spannung zwischen der ersten Elektrode und der zweiten Elektrode anzulegen, und mindestens eine Analyseeinheit umfasst, die dazu ausgelegt ist, einen Strom- und/oder Spannungsverlauf zu analysieren, der sich bei einem Vorhandensein eines auf seine Dichtigkeit zu prüfenden Behälters zwischen der ersten Elektrode und der zweiten Elektrode einstellt, um auf Grundlage hiervon einen dichten bzw. undichten Behälter zu detektieren. Die erfindungsgemäße Vorrichtung ist dadurch gekennzeichnet, dass die Spannungsversorgung dazu ausgelegt ist, eine Gleichspannung zwischen der ersten Elektrode und der zweiten Elektrode anzulegen, vorzugsweise eine Hochspannungs-Gleichspannung, die im Bereich von 500 V bis 50 kV, bevorzugt im Bereich von 5 kV bis 40 kV und ganz besonders bevorzugt im Bereich von 8 kV bis 36 kV liegt.

Der Vorteil einer Verwendung einer Gleichspannung anstelle der üblicherweise im bekannten Stand der Technik verwendeten Wechselspannung liegt u.a. darin, dass sich in der vom Behälter gehaltenen Flüssigkeit keine Wechselströme ausbilden können.

Darüber hinaus ist die gesamte Zeit, in der sich der Behälter, in dem durch die beiden Elektroden gebildeten elektrischen Feld befindet, für eine nachfolgende Analyse heranziehbar.

Anders als bei der Wechselspannung gibt es bei der Gleichspannung keine Abschnitte im Bereich der Nulldurchgänge des Spannungsverlaufs, die für eine Analyse eine zu geringe Feldstärke aufweisen. Das Messsystem bleibt durchgehend empfindlich für Defekte am Produkt (keine "Totzeiten").

Zudem ist bei der erfindungsgemäßen Umsetzung der Vorrichtung der Isolationsaufwand der hochspannungsführenden Teile geringer, da keine oder nur sehr geringe Verschiebungsströme auftreten, da bei Gleichspannungen die extrem hohen Gleichspannungswiderstände dominieren. So können beispielsweise geschirmte Hochspannungskabel verwendet werden und das Isolationsmaterial wird weniger belastet, da keine Verschiebungsströme auftreten. Dies führt zu einer wesentlich geringeren Belastung und Alterung der Isolationsmaterialien (in der Regel Kunststoffe).

Auch gibt es die für AC-Systeme typische Problematik nicht, wonach bei einer Ausgestaltung der beiden Elektroden, die zu einer asymmetrischen Feldverteilung führt, die Messempfindlichkeit bei einer Halbwelle größer als bei der anderen ist. Ferner ist auch eine Abstimmung der Rotationsfrequenz von zu untersuchenden Behältern in Bezug auf die Frequenz der Wechselspannung nicht mehr erforderlich, da es keine Spannungsnulldurchgänge, bei denen keine Detektion möglich ist, mehr gibt. Vormals wurde dieses Problem so umgangen, dass die Rotationsgeschwindigkeit der Behälter nicht zu hoch eingestellt ist, da dann Löcher in einem gewissen Radius um die Nadelelektrodenspitze herum detektiert werden. Bei einem DC-System besteht diese Problematik nicht mehr.

Nach einer weiteren optionalen Fortbildung der vorliegenden Erfindung kann vorgesehen sein, dass zwischen der ersten Elektrode und der zweiten Elektrode in dem Raum zum Anordnen des Behälters eine Vorrichtung zum Rotieren des Behälters um eine Achse vorgesehen ist, damit die mindestens eine Analyseeinheit dazu in der Lage ist, den Stromverlauf während eines Rotierens des Behälters zu analysieren, vorzugsweise während mindestens einer vollen Rotation, insbesondere während mindestens zwei vollen Rotationen des Behälters.

So ist bei einer Analyse dann auch ein Vergleich des erhaltenen Signals in Bezug auf die Periodizität der Behälterrotation bekannt, sodass immer wiederkehrende Auffälligkeiten, welche einen Zusammenhang mit der Periodizität der Behälterrotation aufweisen, erkannt werden können und ausgehend hiervon auf eine Unregelmäßigkeit bzw. eine Undichtigkeit des Behälters geschlossen werden kann.

Nach einer weiteren Fortbildung der vorliegenden Erfindung kann vorgesehen sein, dass die erste Elektrode oder die zweite Elektrode über eine Messimpedanz oder eine Messbrücke mit einem der Pole der Spannungsversorgung verbunden ist, wobei vorzugsweise der Pluspol mit der ersten Elektrode und der Minuspol über die Messimpedanz bzw. Messbrücke mit der zweiten Elektrode verbunden ist, und/oder die Spannungsversorgung dazu ausgelegt ist, eine an die erste Elektrode und die zweite Elektrode anzulegende Gleichspannung kontinuierlich beizubehalten, wobei vorzugsweise die Spannungsversorgung dazu ausgelegt ist, die Gleichspannung über die Prüfung der Dichtigkeit des Behälters hinweg kontinuierlich beizubehalten und dabei insbesondere keine weiteren Komponenten zur Variation des zwischen der ersten Elektrode und der zweiten Elektrode erzeugten elektrischen Feldes, beispielsweise Schalter, überlagerte Wechselfelder oder dergleichen, vorhanden sind.

Auch kann vorgesehen sein, dass die Messimpedanz mit einem ersten ihrer Anschlüsse mit Erde bzw. Masse verbunden ist und mit dem zweiten ihrer Anschlüsse mit der ersten oder der zweiten Elektrode verbunden ist.

Die Messimpedanz bzw. die Messbrücke vereinfacht das Abgreifen eines Messsignals und stellt somit eine einfache Lösung da, um einen gewünschten Strom- und/oder Spannungsverlauf zu erhalten. Durch das kontinuierliche Beibehalten der Gleichspannung ist es insbesondere möglich, auf weitere zusätzliche Bauteile zu verzichten, die ein Anschalten oder Deaktivieren der Gleichspannung durchführen.

Nach einer weiteren optionalen Modifikation der vorliegenden Erfindung kann vorgesehen sein, dass die erste Elektrode und/oder die zweite Elektrode so ausgebildet ist/sind, dass sich zwischen der ersten Elektrode und der zweiten Elektrode ein inhomogenes und/oder asymmetrisches elektrisches Feld ausbildet, um bei einem Einfügen eines Behälters zwischen die beiden Elektroden lokale Feldstärken an dem Behälter zu erzeugen, die besonders hohe Werte annehmen.

Der Begriff "inhomogen" steht dabei für ein Feld, dessen Betrag und/oder Richtung nicht konstant ist. Der Begriff "asymmetrisch" beschreibt ein Feld, dessen "FeldLinien" (Feldverlauf ohne Vorzeichen) nicht symmetrisch ist zur Ebene, die durch die Behälter-Achse und eine etwaige Behälter-Transportrichtung aufgespannt wird.

Alternativ oder zusätzlich dazu kann vorgesehen sein, dass die mithilfe der ersten Elektrode und der zweiten Elektrode erzeugte elektrische Feldstärke im Bereich von 250-1500 V/mm, vorzugsweise im Bereich von 400-1000 V/mm liegt.

Ferner kann nach der vorliegenden Erfindung auch vorgesehen sein, dass die erste Elektrode und/oder die zweite Elektrode in mindestens zwei voneinander getrennte Abschnitte unterteilt ist/sind, um eine Ortsauflösung einer etwaigen Undichtigkeit des Behälters zu erhalten, wobei jede der getrennten Abschnitte über einen separaten Messkanal zu der mindestens einen Analyseeinheit geführt ist, wobei vorzugsweise die in mindestens zwei getrennte Abschnitte unterteilte Elektrode diejenige Elektrode ist, deren Strom- und/oder Spannungsverlauf zum Analysieren an die mindestens eine Analyseeinheit geführt ist.

Ein Beispiel für eine derartige ortsaufgelöste Detektion ist die Unterscheidung von Undichtigkeiten im Bereich der zylindrischen Flächen und im Hals-/Schulter-Bereich von Vials, die im Rahmen der Produktion aus Röhrenglas unterschiedlichen Verformungen unterliegen. Aufgrund der Segmentierung der Elektrode erhält man Informationen darüber, an welcher Stelle Undichtigkeiten in dem Behälter vermehrt auftreten, sodass man eine hierauf gerichtete Fehlersuche starten kann.

So kann nach der Erfindung auch vorgesehen sein, dass es ausgehend von der Messelektrode mehrere Messzweige für separat voneinander ablaufende Analysen vorgesehen sind.

Nach einer weiteren optionalen Fortbildung der vorliegenden Erfindung kann vorgesehen sein, dass die Analyseeinheit bei der Analyse des Behälters auf eine etwaige vorliegende Undichtigkeit dazu ausgelegt ist, auf mindestens ein charakteristisches Muster im Strom- und/oder Spannungsverlauf abzustellen, um eine Undichtigkeit in dem untersuchten Behälter zu detektieren, wobei vorzugsweise das mindestens eine charakteristische Muster des Strom- und/oder Spannungsverlaufs nicht auf das Auftreten einer Blitzentladung zwischen dem Behälter und der ersten Elektrode oder der zweiten Elektrode gerichtet ist, sondern auf Änderungen im Stromverlauf mit wesentlich geringerer mittlerer Leistung..

So kann beispielsweise vorgesehen sein, dass die Analyseeinheit dazu ausgelegt ist, eines oder mehrere der nachfolgenden Auswerteverfahren gleichzeitig oder nacheinander anzuwenden:
a) ein Pulszählverfahren, vorzugsweise mit Amplituden- und Pulsweiten-Selektion,
b) eine Intervall-selektive Integration des Strom- und/oder Spannungssignals, beispielsweise um einen Durchschlagsstrom nachzuweisen,
c) eine Pulsformanalyse vorzugsweise mithilfe numerischer Verfahren wie einer Faltung mit unterschiedlichen Filterfunktionen, einer Bestimmung der Korrelation mit geeigneten Musterfunktionen und/oder einer Berechnung der Spektral-Funktion des Strom- und/oder Spannungssignals mithilfe der Fourier- und/oder Wavelet-Transformation,
d) eine Korrelations-Analyse zwischen den Positionen potentieller Defekte mit der Position des Behälters,
e) eine Untersuchung der Periodizität der auftretenden Stromänderungen im Takt einer Rotation des Behälters, wobei vorzugsweise eine Berechnung der Fourier-Koeffizienten für die Rotationsfrequenz des Behälters und für eine geeignete Anzahl an ganzen Vielfachen, insbesondere dem Doppelten dieser Frequenz erfolgt und/oder eine Regressionsanalyse erfolgt, die auf einer endlichen Reihe aus harmonischen Schwingungen basiert, deren Frequenzen der Rotationsfrequenz des Behälters sowie einer geeigneten Anzahl ganzer Vielfacher insbesondere dem Doppelten dieser Frequenz entspricht,
f) eine Regressionsanalyse mithilfe geeigneter Modellfunktionen, und/oder
g) eine Erkennung von irregulären Signalverläufen mithilfe numerischer Verfahren bzw. einer Deep-Learning-Technologie.

Solche Analyseverfahren sind gerade bei DC-Hochspannungen wesentlich einfacher realisierbar, da das Nutzsignal nicht von anderen Signalen überlagert wird. Bei AC-Spannungen ist dies anders: Hier überlagert ein deutlicher Verschiebungsstrom, dessen Frequenz den Verlauf der AC-Spannung widerspiegelt, das Nutzsignal. Dieser "Untergrund" muss bestimmt (z.B. gefittet) und vom Messsignal abgezogen werden, was nicht beliebig genau gelingt

Hinzu kommt, dass der Umgang mit DC-Hochspannungen wesentlich einfacher ist. So können z.B. Koaxial-Kabel eingesetzt werden, so dass jede weitere Isolation der Kabel überflüssig wird. Zur Erzeugung der DC-Hochspannung existieren komplette HV-Netzteile, es sind keine zusätzlichen Transformatoren notwendig.

Um die Auswerteverfahren zu optimieren, kann wahlweise eine Signalvorverarbeitung über Filter und entsprechend angepassten Verstärkern durchgeführt werden.

Es kann demnach vorgesehen sein, dass ein Netzwerk aus passiven Komponenten vorgesehen ist, um die Impedanz von der Spannungsversorgung zu der mit der Spannungsversorgung verbundenen Elektrode anzupassen. Im einfachsten Fall kann das Netzwerk aus passiven Komponenten (Widerstände, Kapazitäten, Induktivitäten) ein Vorwiderstand sein.

Ferner kann vorgesehen sein, dass die Messimpedanz eine Messbrücke aus passiven Komponenten ist, um den Messbereich und die Frequenzcharakteristik festzulegen. Die Messimpedanz kann dabei zusätzlich Komponenten, wie etwa TVS (Suppressor)-Dioden, zum Schutz der nachfolgenden Messelektronik vor einer zu hohen Spannung aufweisen.

Ebenso kann auch eine optionale Signalkopplung und/oder ein Filter für eine Signalaufbereitung vor einem Zuführen des Signals an die Analyseeinheit vorgesehen sein. Als Signalkopplung kommt beispielsweise eine ohmsche Kopplung oder eine kapazitive Kopplung infrage, wobei aber auch ein induktiver Übertrager genutzt werden kann. Dabei kann vorgesehen sein, dass die Signalkopplung und/oder das Filter mit derjenigen Elektrode verbunden sind, von der auch die Messimpedanz abgeht.

Weiter kann auch ein Verstärker zum Verstärken und/oder zur Signalvorverarbeitung vorgesehen sein. Der Verstärker kann dabei beispielsweise Transistorschaltungen oder Differenzverstärker umfassen und dient dazu, das zu analysierende Signal zu verstärken.

Die Analyseeinheit kann nach einer optionalen Fortbildung einen Analog-Digital-Wandler umfassen, um das analog auftretende Signal digital umzusetzen. Darüber hinaus kann die Analyseeinheit alternativ oder zusätzlich dazu eine Recheneinheit zum Aufzeichnen und zum Auswerten von Daten sowie zum Übertragen von Ergebnissen aufweisen.

Die Erfindung betrifft ferner ein System zur Dichtigkeitsprüfung mit einer Vorrichtung nach einem der vorhergehenden Ansprüche und einem mit einer Flüssigkeit befüllten Behälter, wobei der Behälter während einer Prüfung seiner Dichtigkeit so zwischen der ersten Elektrode und der zweiten Elektrode positioniert ist, dass er weder die erste Elektrode noch die zweite Elektrode kontaktiert, vorzugsweise zu jeder der Elektroden einen Mindestabstand von 0,2 bis 5mm (bevorzugt von 2 mm, weiter bevorzugt 4 mm und ganz besonders bevorzugt 5 mm) aufweist.

Der erhöhte Abstand beim Hindurchführen der Behälter durch den Raum zwischen der ersten Elektrode und der zweiten Elektrode ermöglicht einen Aufbau, der weniger strengen mechanischen Toleranzanforderungen unterworfen ist. Ist hingegen beispielsweise die Funktionsfähigkeit des Systems nur gewährleistet, wenn die beiden Elektroden nur einen maximalen Abstand von 1 mm zu dem zu prüfenden Behälter aufweisen dürfen, ist das rasche Hindurchführen von einer Vielzahl von Behältern durch den Zwischenbereich der beiden Elektroden sehr viel anspruchsvoller zu realisieren.

Darüber hinaus kann das System ferner mit einer Beförderungseinrichtung für den Behälter versehen sein, die vorzugsweise dazu ausgelegt ist, dass die Verweildauer des zu prüfenden Behälters in dem elektrischen Feld, das in dem Raum zwischen der ersten Elektrode und der zweiten Elektrode erzeugbar ist, nicht länger als 1 Sekunde, vorzugsweise nicht länger als 0, 5 Sekunden und bevorzugt nicht länger als 0,05 Sekunden ist. Die Beförderungseinrichtung kann dazu ausgelegt sein, eine Vielzahl von Behältern durch den Raum zwischen der ersten Elektrode und der zweiten Elektrode nacheinander durchzuführen, um jeden der hindurchgeführten Behälter auf eine etwaige Undichtigkeit hin zu untersuchen.

Nach einer optionalen Variation des Systems kann vorgesehen sein, dass der Behälter mit einer Flüssigkeit gefüllt ist, deren Leitfähigkeit bei 20°C im Bereich von 0,5µS/cm bis 20mS/cm, vorzugsweise 2µS/cm bis 10mS/cm, bevorzugt 5µS/cm bis 8mS/cm liegt oder deren Leitfähigkeit bei 20°C im Bereich von weniger als 5µS/cm liegt. Es ist demnach nicht erforderlich, dass der Behälter mit einer leitenden Flüssigkeit gefüllt sein muss, da die vorliegende Vorrichtung bzw. das vorliegende System auch mit einer nicht-leitenden bzw. sehr schwach leitenden Flüssigkeit funktioniert.

Ferner kann vorgesehen sein, dass der Behälter großteils aus einem nicht-leitenden oder einem schwach-leitendem Material ist, beispielsweise aus Glas, keramischen Werkstoffen und/oder Kunststoff, und/oder eine Flasche, ein Vial, eine Ampulle, eine Spritze (inkl. Nadel und Nadelschutz), ein Beutel oder ein Cartridge ist, und/oder eine rotationssymmetrische Form aufweist.

Die Erfindung betrifft ferner ein Verfahren zur Dichtigkeitsprüfung eines Behälters, vorzugsweise unter Verwendung der Vorrichtung nach einem der vorstehend diskutierten Varianten oder einem System nach einem vorgehenden Varianten, wobei in dem Verfahren ein Behälter durch ein elektrisches Feld geführt wird, das durch eine erste Elektrode und eine zweite Elektrode unter Anlegen einer Gleichspannung, vorzugsweise einer Hochspannungs-Gleichspannung, die im Bereich von 500 V bis 50 kV, bevorzugt im Bereich von 10 kV bis 50 kV und ganz besonders bevorzugt im Bereich von 25 kV bis 50 kV liegt, gebildet ist, wobei ein Strom- und/oder Spannungsverlauf an der ersten Elektrode und/oder der zweiten Elektrode analysiert wird, um auf eine Dichtigkeit des Behältnisses zu schließen, und der Behälter, während er sich in dem elektrischen Feld befindet, um seine Rotationsachse rotiert wird, beispielsweise mit einer Rotationsgeschwindigkeit im Bereich von 500-4000 Umdrehungen/min, vorzugsweise 1000-3000 Umdrehungen/min und bevorzugterweise 1200-2000 Umdrehungen/min.

Ferner kann dabei vorgesehen sein, dass der zu untersuchende Behälter in einem elektrisch nicht aufgeladenen Zustand in das elektrische Feld eingeführt wird. Demnach ist es also nicht vorgesehen, dass der zu untersuchende Behälter in einem vorhergehenden Schritt elektrisch aufgeladen wird.

Nach einer optionalen Fortbildung der Erfindung kann bei dem Verfahren vorgesehen sein, dass bei der Analyse des Behälters auf eine etwaige vorliegende Undichtigkeit auf mindestens ein charakteristisches Muster im Strom- und/oder Spannungsverlauf abgestellt wird, um eine Undichtigkeit in dem untersuchten Behälter zu detektieren, wobei vorzugsweise das mindestens eine charakteristische Muster des Strom- und/oder Spannungsverlaufs nicht auf das Auftreten einer Blitzentladung zwischen dem Behälter und der ersten Elektrode oder der zweiten Elektrode gerichtet ist, sondern auf Änderungen im Strom- und/oder Spannungsverlauf mit wesentlich geringerer mittleren Leistung.

Vorzugsweise kann bei dem erfindungsgemäßen Verfahren vorgesehen sein, dass bei der Analyse des Behälters auf eine etwaige vorliegende Undichtigkeit die oberhalb eines Schwellenwerts liegenden Pulse im Strom- und/oder Spannungsverlauf betrachtet werden, um anhand hiervon die Dichtigkeit des Behälters beurteilen zu können, wobei vorzugsweise eine erhöhte Pulsrate im Strom- und/oder Spannungsverlauf entsprechend der Periodizität der Rotation des Behälters ein Hinweis auf eine Undichtigkeit im Behälter ist, und/oder ein entsprechend der Periodizität der Rotation des Behälters vorübergehendes Ausbleiben der Pulse im Strom- und/oder Spannungsverlauf ein Hinweis auf eine Undichtigkeit im Behälter ist. Ferner kann vorgesehen sein, dass nur solche Pulse betrachtet werden, die unterhalb eines zweiten Schwellenwerts liegen.

Vorzugsweise kann bei der Analyse des Behälters eine Korrelation des aktuell zu analysierende Strom- und/oder Spannungsverlaufs zu einem typischen Strom- und/oder Spannungsverlauf ohne Undichtigkeit und/oder mit Undichtigkeit berechnet wird, um anhand hiervon auf eine Undichtigkeit in dem aktuell untersuchten Behälter schließen zu können, und/oder auf entsprechend der Periodizität der Rotation des Behälters auftretende Abweichungen im Strom- und/oder Spannungsverlauf abgestellt wird, die vorzugsweise über mindestens zwei Rotationsperioden auftreten.

Rotiert der Behälter während er sich in dem durch die beiden Elektroden aufgebauten elektrischen Feld befindet, können sich in dem Strom- und/oder Spannungsverlauf Abweichungen ergeben, deren Periodizität mit der der Rotation des Behälters übereinstimmt oder mit dieser in Zusammenhang steht (beispielsweise mit der doppelten Rotationsfrequenz übereinstimmt). Diese können einen Hinweis auf eine Undichtigkeit in dem Behälter darstellen, die sich an einer bestimmten Stelle des Behälters befindet.

Ferner kann vorgesehen sein, dass bei der Analyse des Behälters der Strom- und/oder Spannungsverlauf in das Fourier-Spektrum überführt wird, wobei vorzugsweise bei Überschreiten eines Schwellenwerts einer Amplitude im Bereich der doppelten Rotationsfrequenz des Behälters auf eine Undichtigkeit des Behälters geschlossen wird, und/oder die Beiträge der Fourier-Koeffizienten für die doppelte Rotationsfrequenz des Behälters und/oder eines ganzzahligen Vielfachen davon berechnet werden und bei Überschreiten eines Schwellenwerts der Beiträge an diesen Stellen auf einen undichten Behälter geschlossen wird.

Dabei kann vorgesehen sein, dass der zu analysierende Stromverlauf das Einbringen in das elektrische Feld, das Verweilen und das Herausführen des Behälters aus dem elektrischen Feld umfasst.

Die Nutzung der Fourier-Transformation oder auch einer Wavelet-Transformation ist bei der Analyse von Vorteil und ermöglicht unter Umständen eine sehr einfache Unterscheidung zwischen einem intakten und einen undichten Behälter. Stellt man beispielsweise auf die Fourierkoeffizienten im Bereich der Rotationsfrequenz oder im Bereich der doppelten Rotationsfrequenz ab, ergibt sich ein signifikanter Unterschied zwischen intakten Behältern und undichten Behältern, der eine einfache Schwellwertanalyse zum Erfassen von Undichtigkeiten ermöglicht.

Weitere Merkmale, Einzelheiten und Vorteile der Erfindung werden anhand der nachfolgenden Figurenbeschreibung ersichtlich. Dabei zeigen:
- Fig. 1a:: eine schematische Darstellung einer erfindungsgemäßen Vorrichtung mit einem zu untersuchenden Behälter,
- Fig. 1b:: eine schematische Darstellung einer erfindungsgemäßen Vorrichtung mit einem zu untersuchenden Behälter,
- Fig. 2:: eine weitere schematische Darstellung einer erfindungsgemäßen Vorrichtung nach einer weiteren Ausführungsform,
- Fig. 3:: eine schematische Darstellung einer erfindungsgemäßen Vorrichtung nach einer weiteren Ausführungsform,
- Fig. 4a:: eine beispielhafte Darstellung eines Messsignals für einen mit destilliertem Wasser gefüllten dichten Behälter,
- Fig. 4b:: eine beispielhafte Darstellung eines Messsignals für einen mit destilliertem Wasser gefüllten undichten Behälter,
- Fig. 4c:: eine weitere beispielhafte Darstellung eines Messsignals für einen mit destilliertem Wasser gefüllten dichten Behälter,
- Fig. 4d:: eine weitere beispielhafte Darstellung eines Messsignals für einen mit destilliertem Wasser gefüllten undichten Behälter,
- Fig. 5:: eine beispielhafte Darstellung einer Auswertung mit dem Pulszähl-Verfahren auf Grundlage von Messungen analog nach den Figuren 4a und 4b,
- Fig. 6a:: eine beispielhafte Darstellung eines Messsignals für einen mit destilliertem Wasser gefüllten dichten Behälter und einem Anliegen einer negativen Spannung an der Messelektrode,
- Fig. 6b:: eine beispielhafte Darstellung eines Messsignals für einen mit destilliertem Wasser gefüllten undichten Behälter und einem Anliegen einer negativen Spannung an der Messelektrode,
- Fig. 7a:: eine Darstellung eines auf Grundlage der Figuren 6a und 6b weiterverarbeiteten Messsignals eines undichten und eines dichten Behälters, bei dem mithilfe einer geeigneten Musterfunktion die Korrelation berechnet worden ist,
- Fig. 7b:: eine Darstellung eines auf Grundlage der Figuren 6a und 6b weiterverarbeiteten Messsignals eines undichten und eines dichten Behälters, bei dem mithilfe einer geeigneten Musterfunktion die Korrelation berechnet zuvor jedoch die Signalamplitude auf einen max. reduziert worden ist, sofern dieser überschritten wurde.
- Fig. 8a:: eine Darstellung eines auf Grundlage der Fig. 7a weiterverarbeiteten Messsignals, bei dem eine Mittelung über drei Rotationsperioden eines rotierten Behälters erfolgt ist,
- Fig. 8b:: eine Darstellung eines auf Grundlage der Fig. 7b weiterverarbeiteten Messsignals, bei dem eine Mittelung über drei Rotationsperioden eines rotierten Behälters erfolgt ist,
- Fig. 9:: eine Darstellung einer weiteren Auswertemöglichkeit unter Nutzung des Fourier-Spektrums für einen dichten und einen undichten Behälter, und
- Fig. 10:: eine Darstellung der Fourier-Koeffizienten für die doppelte Rotationsfrequenz für eine ganze Reihe verschiedener Typen an dichten und undichten Behältern.

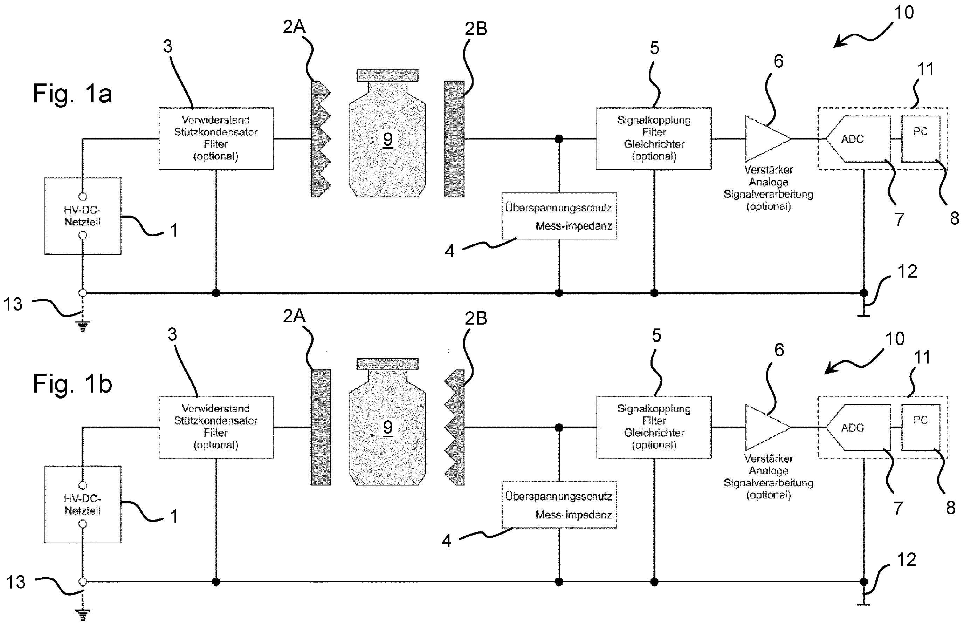

Fig. 1a zeigt ein Blockschaltbild eines erfindungsgemäßen Systems zur Dichtigkeitsprüfung mit Gleichspannung.

Das System 10 zur Dichtigkeitsprüfung umfasst eine Spannungsversorgung 1 zum Bereitstellen einer Gleichspannung im Bereich von 500 V bis 50 kV, eine erste Elektrode 2A und eine zweite Elektrode 2B zum Erzeugen eines elektrischen Feldes sowie einen zwischen der ersten Elektrode 2A und der zweiten Elektrode 2B platzierten Behälter 9, der in Bezug auf seine Dichtigkeit zu überprüfen ist. Die erste Elektrode 2A steht dabei mit einem ersten Pol der Spannungsversorgung 1 in Verbindung, wohingegen die zweite Elektrode 2B über eine Messimpedanz 4 mit dem zweiten Pol der Spannungsversorgung 1 verbunden ist. Der zweite Pol der Spannungsversorgung kann dabei mit Masse 12 oder auch Erde 13 gekoppelt sein, um ein gleichbleibendes Bezugsniveau für die Messungen zu erhalten.

Die Messimpedanz 4 kann einen Messwiderstand oder eine Messbrücke aus passiven Komponenten (Widerstände, Kapazitäten, Induktivitäten) aufweisen, um den Messbereich und die Frequenzcharakteristik der erhaltenen Signale festzulegen.

Darüber hinaus können auch weitere Komponenten wie beispielsweise TVS-Dioden vorgesehen sein, um nachfolgende elektronischen Bauteile vor Spannungen hoher Amplitude zu schützen.

Die erste Elektrode 2A kann darüber hinaus mit einem optional vorsehbaren Netzwerk 3 aus passiven Komponenten verbunden sein, um eine geeignete Anpassung der Widerstände von der Spannungsversorgung 1 zu der ersten Elektrode 2A vorzunehmen.

Ebenfalls optional kann die zweite Elektrode 2B mit einer Signalkopplung und/oder einem Filter 5 für eine Signalaufbereitung verbunden sein. Diese Signalkopplung kann eine ohmsche oder kapazitive Kopplung wie auch einen induktiver Übertrager umfassen.

Zudem kann in Reihe dazu auf der von der zweiten Elektrode 2B abgewandten Seite der Signalkopplung und/oder dem Filter 5 eine Verstärkereinheit 6 vorgesehen sein, um die erfassten Signale aufzubereiten. Dieser Verstärker 6 kann Transistorschaltungen, Differenzverstärker oder dergleichen aufweisen.

Die Analyseeinheit 11 umfasst dabei einen Analog-Digital-Wandler 7, der beispielsweise in Form einer Messkarte vorliegen kann, sowie eine Recheneinheit 8, um Daten aufzuzeichnen, auszuwerten und das hieraus abgeleitete Ergebnis an eine entsprechende Stelle zu übertragen.

Die Kette der analogen Signalverarbeitung - angefangen von der Messimpedanz 4 bis einschließlich zum Verstärker 6 - wird oftmals unter dem Begriff Signal-Vorverarbeitung zusammengefasst.

Der auf seine Dichtigkeit hin zu untersuchenden Behälter 9 ist dabei im Zwischenraum angeordnet, der durch den Abstand der ersten Elektrode 2A zu der zweiten Elektrode 2B gebildet ist. In diesem Bereich bildet sich bei Anlegen einer Spannung an die Elektroden 2A/2B ein elektrisches Feld aus, sodass bei einer entsprechenden Analyse des Strom- und/oder Spannungsverlaufs an der Messelektrode 2B ein Rückschluss auf die Dichtigkeit des Behälters 9 erfolgen kann.

Der Behälter 9 befindet sich während der Dichtigkeitsprüfung zwischen den zwei Elektroden 2A/2B, zwischen denen das elektrische Feld durch Anlegen der Spannung erzeugt worden ist. Die Form der Elektroden bestimmt den Feldverlauf des elektrischen Feldes. Hierzu wird die Hochvolt-Elektrode 2A über einen optionalen Vorwiderstand und einen optionalen Stützkondensator an eine entsprechende Gleichspannungsversorgung 1 angeschlossen. Der Gegenpol der Spannungsversorgung 1, beispielsweise ein Netzteil, stellt das Bezugspotential dar (GND 12) und kann im Allgemeinen mit Erdpotential 13 (Schutzerde) verbunden werden.

Die Messelektrode 2B kann dabei über eine Messbrücke 4 - umfassend eine Messimpedanz (im einfachsten Fall ein Mess-Widerstand) und einen Überspannungsschutz, der ebenfalls mit dem Bezugspotential (GND) verbunden ist, verbunden sein, so dass sich der Stromkreis über die Spannungsversorgung 1 schließt.

Durch eine entsprechende Formung der Elektroden (in Fig. 1a dargestellt durch die gewellte Form der Elektrode 2A) können hohe Feldstärken (= Potential-Gradienten) an der Hochvolt-Elektrode 2A anliegen. Die ist alternativ auch in der Niedervoltelektrode möglich.

Das zu analysierende Messsignal wird an der Mess-Elektrode 2B abgegriffen, über eine optionale Signalkopplung, ein optionales Filter (bspw. Tiefpass, Hochpass, Bandpass, Bandsperre sowie Kombinationen dieser Grundtypen) und Gleichrichtern vorverarbeitet und über einen ebenfalls optionalen Vorverstärker (Transistor-Verstärker, Differentielle Verstärker, ...) mit der zusätzlichen Möglichkeit einer ersten Signalverarbeitung (z.B. Integrator) von der Analyseeinheit 11 digitalisiert und ausgewertet werden. Diese Analyseeinheit 11 übernimmt die Endauswertung der Daten und trifft die Entscheidung, ob eine Undichtigkeit vorliegt. Hierbei können unterschiedliche Algorithmen parallel zum Einsatz kommen, um eine optimale Ergebnis-Sicherheit zu erreichen.

Die Analyseeinheit 11 umfasst im Allgemeinen einen Analog-Digital-Wandler 7 und eine Recheneinheit 8, die vorzugsweise über zusätzliche IO-Signale und Schnittstellen das gesamte System steuern und überwachen und auch die Verbindung zur Steuerung des Systems 10 zur Verfügung stellen. Dem Fachmann ist klar, dass anstelle der Recheneinheit 8 mit separater Messkarte zur Datenerfassung auch Mikrocontroller-Module mit integrierten AD-Wandlern zum Einsatz kommen können, wobei die Möglichkeiten der Datenanalyse von der Leistungsfähigkeit der Controller abhängen.

Ferner ist vorgesehen, dass die Spannungsversorgung 1 selbst keinerlei Manipulation, z.B. einer Umpolung durch separate Schalter oder dergleichen, unterliegt. Somit sind keine zusätzlichen hochvolttauglichen Komponenten notwendig.

Fig. 1b zeigt einen identischen Aufbau wie in Fig. 1a und unterscheidet sich hiervon nur dadurch, dass nun die Messelektrode 2B - und nicht wie in Fig. 1a die HV-Elektrode 2A- entsprechend ausgeformt ist, sodass dort nun die hohen Feldstärken anliegen.

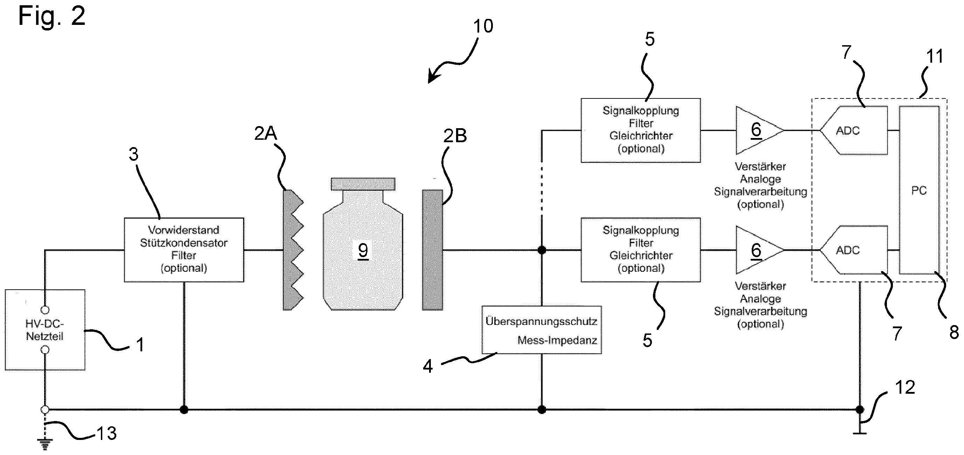

Fig. 2 zeigt ein Blockschaltbild eines erfindungsgemäßen Systems, bei dem die an der Messelektrode 2B anliegenden Signale über mehrere separate Kanäle zu einer entsprechend modifizierten Analyseeinheit 11 geführt werden.

In sehr kritischen Fällen (d.h. bei sehr kleinen Undichtigkeiten und/oder geringen Leitfähigkeiten der Behälterinhalte) kann zur Verbesserung des Inspektionsergebnisses das Messsignal in mehrere parallele Verarbeitungskanäle eingespeist werden, wobei vorteilhafterweise deren jeweilige Eingangswiderstände ausreichend hoch sind. Hierbei können alle optionalen Komponenten von der Signalkopplung 5 bis zum Verstärker 6 unterschiedlich gewählt werden und alternative Algorithmen zur Signalverarbeitung in der Analyseeinheit 11 bzw. der Recheneinheit 8 zum Einsatz kommen. Die Kombination diese Auswertungen kann dann das Ergebnis der Dichtigkeitsprüfung bestimmen.

Dies ist von Vorteil, da hierbei unterschiedliche Ansätze bei der Analyse der erzeugten Messdaten verwendet werden können und im Nachhinein eine etwas allgemeinere Betrachtung der verschiedenen Analyseverfahren möglich ist, sodass mit einer höheren Wahrscheinlichkeit auf das richtige Ergebnis geschlossen werden kann.

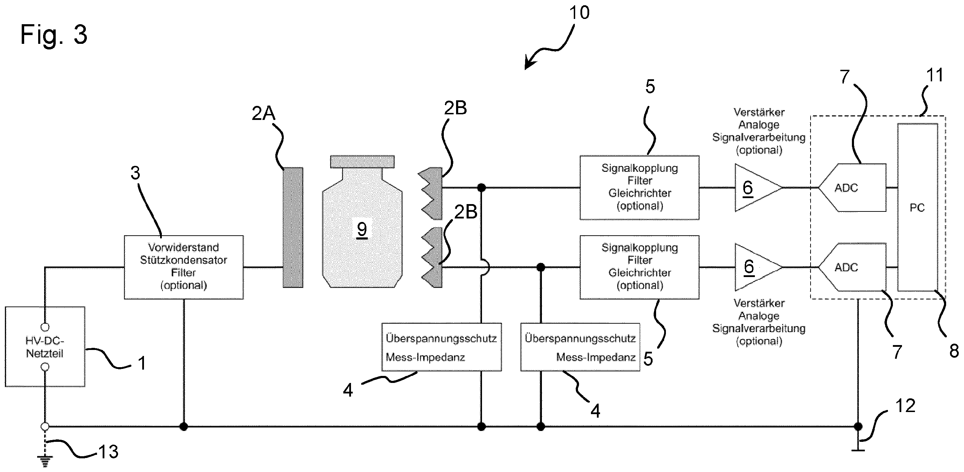

Fig. 3 ist eine weitere Ausführungsform der vorliegenden Erfindung, die im Grundaufbau eine hohe Ähnlichkeit zur Fig. 1 aufweist. Im Unterschied hierzu ist jedoch die Messelektrode 2B in mindestens zwei voneinander separate Bestandteile segmentiert, sodass eine gewisse Ortsauflösung einer detektierten Undichtigkeit möglich ist.

Soll beispielsweise im Rahmen der Produktion der Behälter ermittelt werden, wo bevorzugt Undichtigkeiten auftreten, so kann die Messelektrode 2B segmentiert werden, um eine grobe Ortsauflösung zu erreichen. Jedes Elektrodensegment erhält hierbei seinen eigenen Messkanal mit den beschriebenen Komponenten zur Signalvorverarbeitung und wird über einen eigenen A/D-Converter ausgelesen.

Ein Verwendungsbeispiel für eine derartige ortsaufgelöste Detektion wäre die Unterscheidung von Undichtigkeiten im Bereich der zylindrischen Flächen und im Hals-/Schulter-Bereich von Vials, die im Rahmen der Produktion aus Röhrenglas unterschiedlichen Verformungen unterliegen.

Dem Fachmann ist klar, dass natürlich auch hier die Mehrkanal-Lösung mit der ortsauflösenden Umsetzung kombiniert werden kann. Da moderne A/D-Wandler in der Regel über mehrere analoge Eingänge verfügen und auch die Leistung aktueller Recheneinheiten hier keine Einschränkung darstellt, bedeutet dies keine wesentliche Kostenerhöhung.

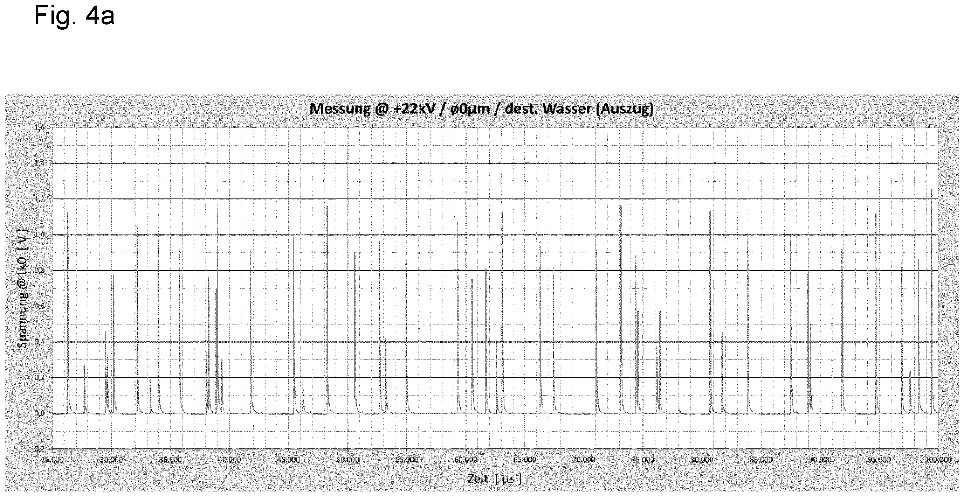

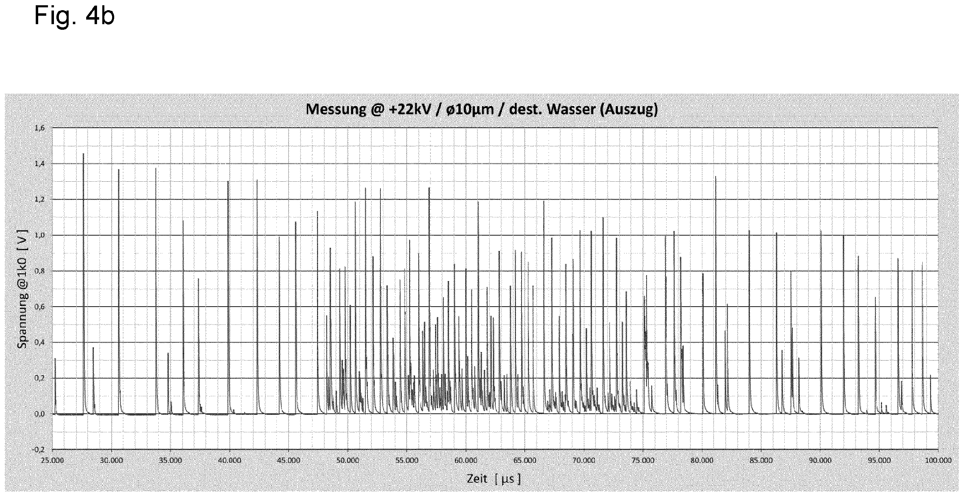

Figs. 4a und 4b zeigen jeweils einen Ausschnitt aus einer Messung der Spannungssignale an der Messelektrode 2B für einen dichten Behälter (Fig. 4a) und einen Behälter mit einem Laser-gebohrten Loch von 10µm Durchmesser (Fig. 4b) bei einer positiven Spannung von +22kV an der HV-Elektrode 2A, gemessen mit einem Vorwiderstand von einigen MW, einem Messwiderstand von 1,0 kΩ und einem RC-Filter. Die mittlere Feldstärke des inhomogenes asymmetrisches E-Feldes lag bei etwa 1000 V/mm. Der mit destilliertem Wasser teilweise gefüllte Behälter wurde rotiert. Der Elektrodenabstand zum Behälter betrug beidseitig 2mm. Rotation und der Transport erfolgten mit Geschwindigkeiten wie sie für Inspektionsmaschinen typisch sind (etwa 10 Behälter pro Sekunde).

Um den gesamten Umfang eines Behälters untersuchen zu können, müssen alle innen liegenden Flächen, die untersucht werden sollen, mit Flüssigkeit benetzt sein. Um z.B. die Seitenwandflächen rotationssymmetrischer Behälter großflächig überprüfen zu können, werden diese rotiert, während sie das E-Feld passieren, um mit Hilfe der Zentrifugalkraft die Flüssigkeit an die Innenwand des Behälters zu drücken. Um alle Flächen eines Behälters mit hoher Sicherheit inspizieren zu können, kann auch vorgesehen sein, mehrere Inspektionseinheiten vorzusehen.

Bei Gleichspannung treten keine Wechselströme und - auf Grund des hohen ohmschen Widerstandes der Gasstrecke und der Behälter - innerhalb der Flüssigkeit nur sehr niedrige Gleichströme auf. Lediglich beim Eintritt des Behälters wird dieser ebenso wie sein Inhalt "polarisiert". Die bspw. aus Glas bestehenden Behälter wirken oft als zusätzliche Isolatoren in der Gasstrecke, so dass mit einem Behälter im elektrischen Feld der Gleichstrom-Untergrund sogar sinkt. Dies führt zu geringen Wechselströmen im Takt der Behälterabfolge.

Wird zwischen zwei Elektroden eine Spannung ausreichender Amplitude angelegt, so zeigt das gemessene Stromsignal unregelmäßig auftretende Pulse, deren Amplitude und Dichte von der Amplitude des elektrischen Feldes und - bei inhomogenen asymmetrischen Feldern - auch von der Feldrichtung (d.h. vom Vorzeichen der Spannung) abhängen (vgl. Fig. 4a/b).

Einen weiteren großen Einfluss hat die Eigendrehung des Behälters: Wird der Behälter ohne eigene Drehung zwischen den Elektroden vorbeigeführt, wirkt er eher als Isolator (abhängig vom Behältermaterial, insbesondere bei Glas). Dies liegt daran, dass Ladungen auf den isolierenden Behälterflächen zwar anhaften, sich auf diesen aber nicht frei bewegen können. Rotierende Behälter bewirken einen Transport auch geladener Teilchen, die sich an die Glasfläche anlagern und anschließend wieder abgesaugt werden, so dass sich die Anzahl der Pulse erhöht.

Sofern es sich nicht um Teilentladungen im Behältermaterial handelt, werden die Pulse durch "Teilchen" (geladene oder polare Teilchen, Partikel, kleinste Tröpfchen) hervorgerufen, die das Feld passieren und von den Elektroden "abgesaugt" werden. Ihr Ursprung kann unterschiedliche sein, und kann bspw. zurückgehen auf:
- Elektronen, die von den Elektroden emittiert werden,
- Elektronen-Ionen-Paare, die im Gasvolumen z.B. durch Photoeffekt entstehen, zurückgehen,
- Teilchen, die sich von der Oberfläche der Behälter lösen,
- Teilchen, die aus dem Leck des Behälters austreten, und/oder
- Natürliche Radioaktivität und Kosmische Strahlung.

Die Erfindung beruht auf dem Einsatz einer einfachen DC-Hochspannungsquelle. Mit ihrer Hilfe wird ein elektrisches Feld erzeugt, dessen genauer Verlauf durch die Form der Elektroden bestimmbar ist. Denkbar sind, je nach Art des Behälters und des Behälterinhalts, homogene wie inhomogene Felder. Es werden keinerlei sonstige Komponenten zur Variation des Feldes (Schalter, überlagerte Wechselfelder, ...) verwendet.

Mit HV-Gleichspannung sind somit zwei grundlegende Messverfahren möglich. Zum einen der Nachweis der vergleichsweise hohen Ströme bei Blitzentladungen an einer Undichtigkeit und zum anderen der Nachweis von charakteristischen Stromänderungen wesentlich geringerer Amplitude bei reduzierter Feldstärke zur Vermeidung von Blitzdurchschlägen.

Im zweiten Fall sind die Ströme, die durch die oben beschriebenen Strompulse auch innerhalb des Produktes auftreten, sind sehr viel kleiner, solange es nicht zu einer Blitzentladung kommt.

Die geringen Ströme bedeuten aber auch, dass ein Nachweis von Undichtigkeiten über ein integrales (durch Filter geglättetes) Stromsignal erschwert ist, da der Unterschied zwischen einem defekten und dichten Behälter wesentlich geringer ausfällt, insbesondere bei Behälterinhalten mit geringer Leitfähigkeit (z.B. destilliertes Wasser).

Damit die beschriebene Dichtigkeitsprüfung mit HV-Gleichspannungen ihre Stärken voll ausspielen kann, ist eine komplette Aufzeichnung des Stromsignals - vor, während und nach der Behälter-Passage - von Vorteil. Die Aufzeichnung kann mit schnellen Messkarten erfolgen, die in der Lage sind, die komplexe zeitliche Struktur des Stromsignals aufzulösen. Die bevorzugt eingesetzten Sampling-Raten liegen bei mind. 100 kSPS, bevorzugt bei 500 kSPS und höher.

Zusätzlich können Komponenten im Signalpfad zum Einsatz kommen, die eine erste Signalaufbereitung ermöglichen, und gleichzeitig dem Schutz der nachgelagerten Messgeräte dienen. Der komplette Informationsgehalt des Stromverlaufs bleibt hierbei aber voll erhalten.

Die Figs. 4a und 4b zeigen dabei einen typischen Signalverlauf bei einer Dichtigkeitsprüfung nach der vorliegenden Erfindung.

Bei dem Produkt ohne Undichtigkeit (Fig. 4a) lassen sich einzelne scharfe Pulse mit einer Halbwertsbreite von grob 50 µs nachweisen. Diese Art von Puls wird im Folgenden als Trichel-Puls bezeichnet. Ihre Zählrate beträgt etwa 1000/s. Dies gilt auch für den undichten Behälter, solange das Leck nicht zu den Elektroden ausgerichtet ist.

Sobald das Leck auf Grund der Eigenrotation des Behälters die HV-Elektrode 2A passiert, steigt die Pulsrate drastisch an (vgl. Fig 4b). Es treten insb. zusätzlich Pulse geringerer Amplitude auf, die jetzt die fallenden Flanken der vorher ungestörten Pulse überlagern, aber auf Grund des sehr guten Signal/Rausch-Verhältnisses trotzdem sicher aufgelöst und gezählt werden können. Bei dieser Art von Konfiguration reicht das Zählen der Pulse - bevorzugt selektiert nach ihrer Amplitude - um dichte und undichte Produkte zu unterscheiden.

Diese erhöhte Pulsrate erscheint immer dann, wenn das Loch im rotierenden Behälter das Feld an der HV-Elektrode 2A passiert. Die einzelnen Pulse stellen keine elektrischen Durchschläge (Blitzentladung) dar, der im Mittel fließende Strom ist wesentlich geringer. Die Strom-Amplituden von Blitzentladungen wären bei den genannten Messwiderständen um einen Faktor 10 bis 100 größer als die der Trichel-Pulse. Ein durch eine Blitzentladung erzeugter Puls wird im Folgenden als Burst-Puls bezeichnet.

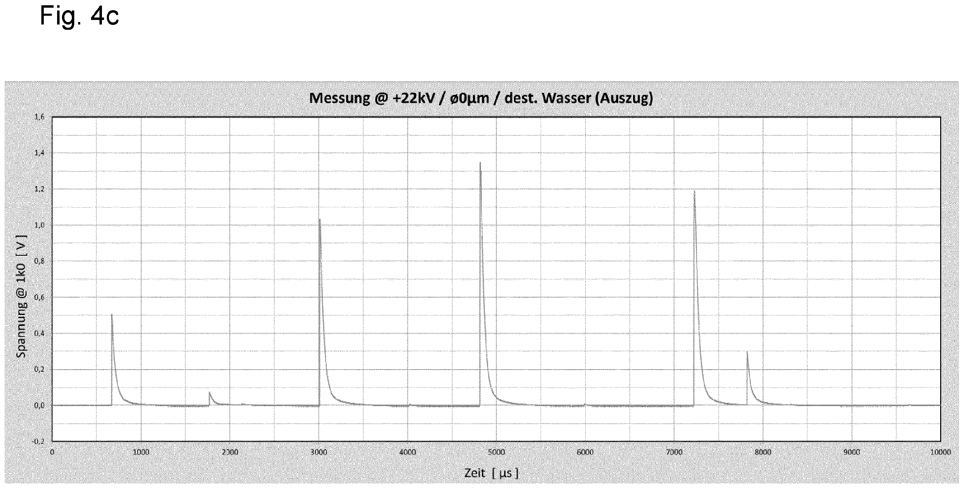

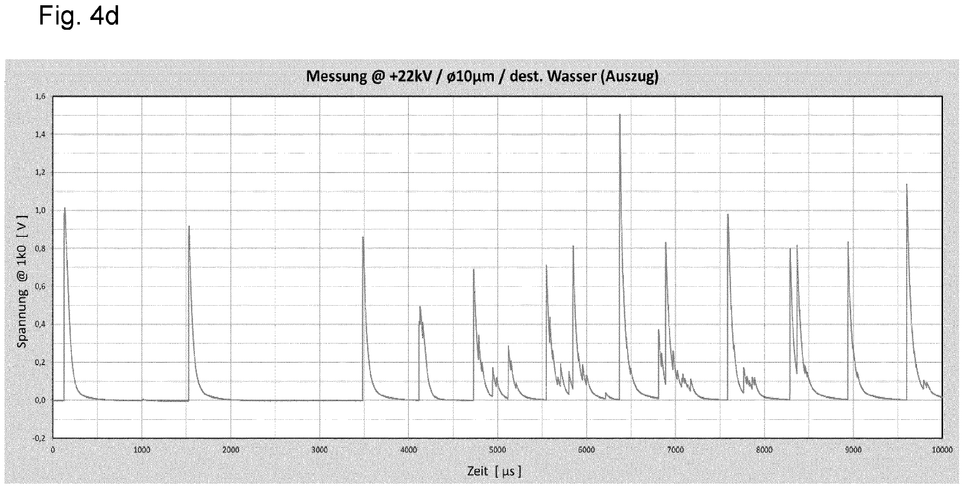

Die Figuren 4c und 4d zeigen dabei zu den Figuren 4a und 4b korrespondierende Darstellungen, die in zeitlicher Hinsicht besser aufgelöst sind. Auch hier ist ersichtlich, dass die Frequenz der Pulse bei Vorhandensein einer Undichtigkeit zunimmt, sodass anhand hiervon auf einen undichten Behälter geschlossen werden kann. Deutlich wird auch die Überlagerung einzelner Pulse, sobald die Pulsrate bei undichten Stellen im Container stark ansteigt.

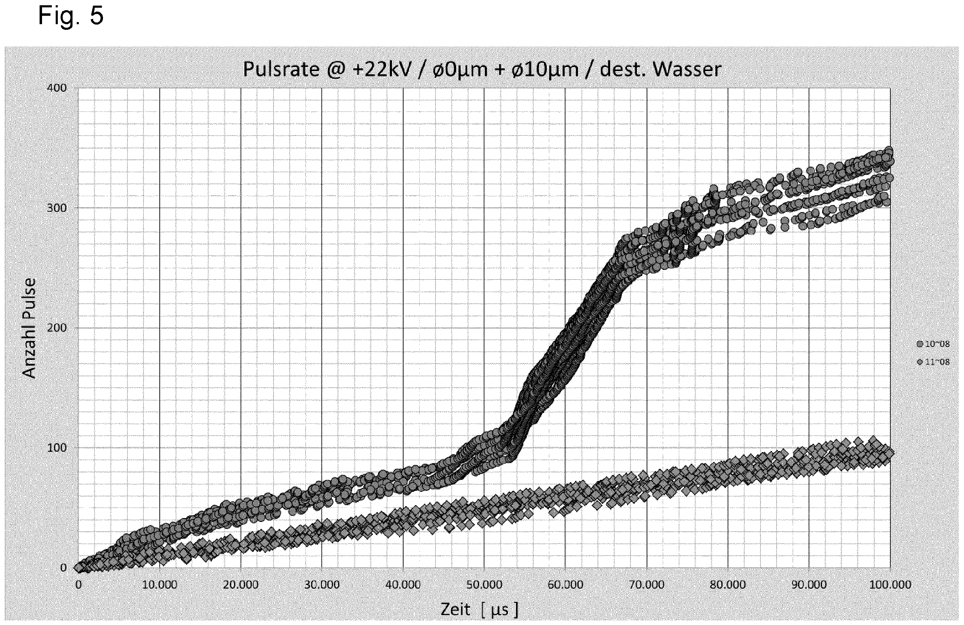

Fig. 5 zeigt eine Auswertung mehrerer Messungen (vergleichbar den in Figuren 4a und 4b) mit dem Pulszähl-Verfahren unter Anwendung einer geeigneten Amplitudenauswahl. Hierfür wurden beispielsweise nur diejenigen Pulse gezählt, deren Amplitudenwert einen bestimmten Schwellenwert überschritten hat. Dargestellt ist die Anzahl der gezählten Pulse über die Zeit während der Passage (und natürlich auch dem Verweilen) des Behälters durch das E-Feld.

Der Algorithmus erkennt und zählt hierbei alle Pulse, die innerhalb eines Amplituden-Bereichs liegen. Voraussetzung ist ein ausreichend niedriger Rauschpegel, der entsprechende Anforderungen an die Spannungsversorgung und die verwendete Messtechnik stellt.

Passiert das Leck des rotierenden Behälters den Bereich vor der HV-Elektrode 2A, so steigt die Zählrate drastisch an, erkennbar an der Stufe in der Zählrate (kreisförmige Messpunkte) im Zeitbereich zwischen 50.000 und 70.000µs. Dagegen verläuft die Zählrate der dichten Behälter während der gesamten Passage gleichmäßig flach (rautenförmige Messpunkte). Die Gesamt-Zählraten erreichen zwischen undichten und dichten Behältern ein Verhältnis von 3:1 oder besser. Die Streuung der Zählraten für undichte und noch mehr für dichte Behälter ist bei weitem geringer, so dass eine sichere Trennung gewährleistet ist.

Die Spannungsversorgung wies vorliegend 22 kV auf, die untersuchten Behälter waren mit destilliertem Wasser befüllt, das eine Leitfähigkeit von etwa 5 µS besitzt und die Undichtigkeit in den untersuchten undichten Behältern war eine Laserbohrung mit Durchmesser von 10 µm.

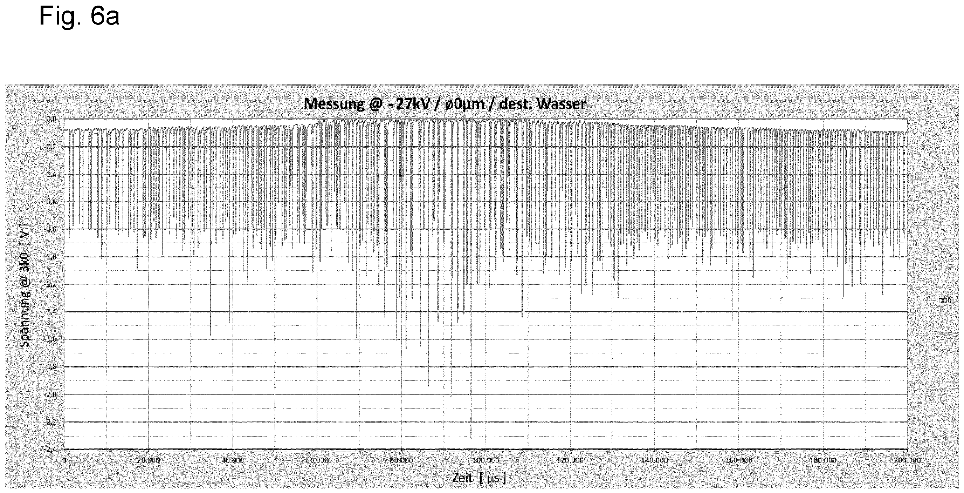

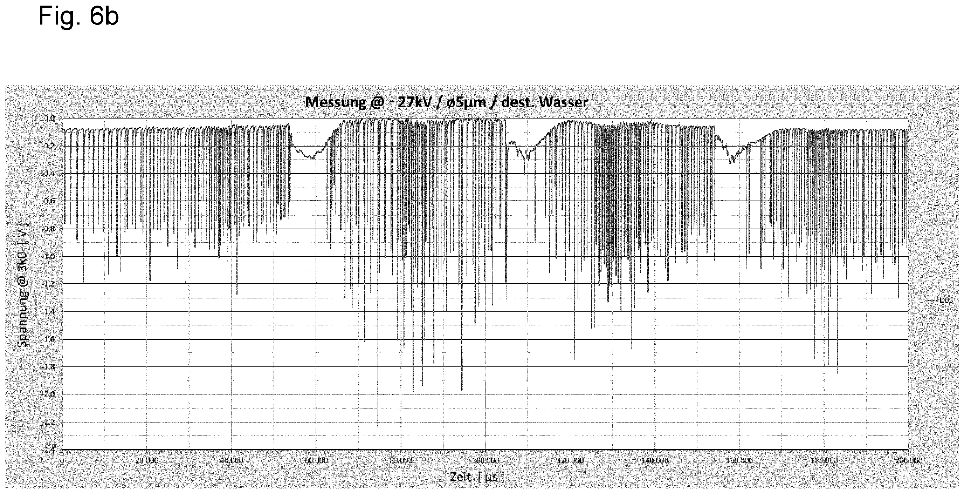

Die Figs. 6a und 6b zeigen Messungen der Spannungssignale für einen dichten Behälter (vgl. Fig. 6a) und einen Behälter mit einem lasergebohrten Loch mit 5µm Durchmesser (vgl. Fig. 6b) bei einer negativen Spannung von -27kV an der HV-Elektrode 2A, gemessen mit einem Messwiderstand von 3,0 kΩ und einem RC-Filter.

Die mittlere Feldstärke des inhomogenen asymmetrischen E-Feldes lag bei etwa 840 V/mm. Der mit destilliertem Wasser teilweise gefüllte Behälter wurde rotiert. Der Elektrodenabstand zum Behälter betrug beidseitig 5mm (!). Rotation und der Transport erfolgten mit Geschwindigkeiten wie sie für Inspektionsmaschinen typisch sind. Die Leitfähigkeit der Flüssigkeit lag bei etwa 5µS (dest. Wasser). Das Spektrum des unbeschädigten Behälters zeigt einen vergleichsweisen gleichförmigen Verlauf, gekennzeichnet durch eine mehr oder weniger regelmäßige Abfolge von Trichel-Pulsen mit einer Halbwertsbreite von grob 50 µs. Man erkennt eine leichte Reduzierung des Untergrundpegels, sobald der Behälter den Raum zwischen den Elektroden passiert, da der Glasbehälter als zusätzlicher Isolator wirkt. Gleichzeitig sinkt die Pulsrate geringfügig, wobei die Pulsamplituden steigen. Dieser Einfluss auf das Messsignal hängt von den Messparametern, insb. von der Feldrichtung ab.

Bei dem undichten Behälter (vgl. Fig. 6b) treten zusätzlich markante Signaländerungen auf. Auf Grund der voreingestellten Rotationsgeschwindigkeit passiert das Leck alle 50 ms die HV-Elektrode 2A, in der dargestellten Messung bei den Zeitmarken 58 / 108 / 158 ms. Deutlich werden an diesen Stellen die Änderungen im Signalprofil sichtbar. Die steigende Anzahl der schmalen Trichelpulse "vereinigen sich" zu breiten Pulsen geringerer Amplitude aber insgesamt höherer Intensität (Leistung), solange das Leck im Bereich der HV-Elektrode bleibt. Diese Art von Puls wird im Folgenden als Leck-Puls bezeichnet.

Wenn das Leck zwischen diesen Zeitpunkten die Messelektrode passiert, in den dargestellten Beispiel bei 83 / 133 / 183 ms (ansatzweise auch schon bei 40 ms), erhöht sich zusätzlich die Rate der Trichel-Pulse. Die Änderungen im Signalverlauf sind ein eindeutiger Fingerabdruck zum Nachweis defekter Behälter.

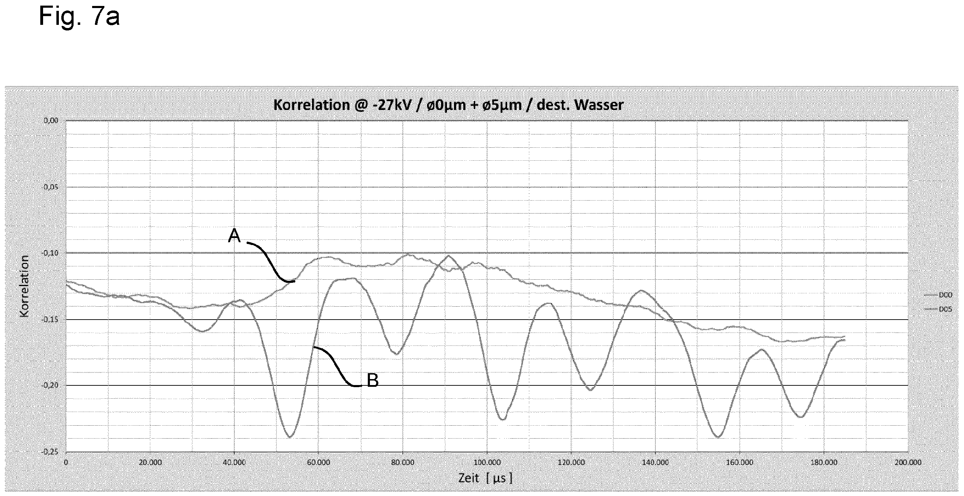

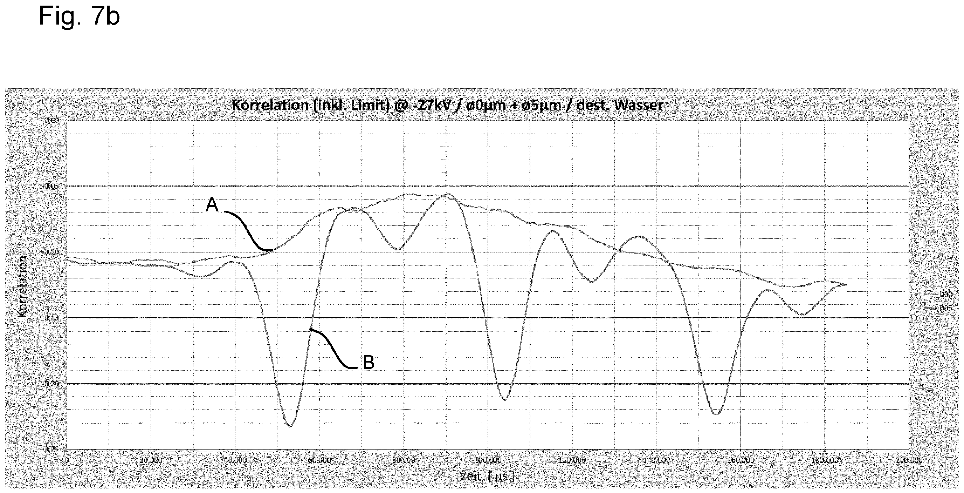

Die Figs. 7a und 7b zeigen das Ergebnis einer weiteren Auswertungsmethode. Für die in den Figs. 6a/b dargestellten Messungen wurde mit Hilfe einer geeigneten Musterfunktion die Korrelation berechnet. Die Musterfunktion wurde auf die Form der Leck-Pulse hin optimiert, sie ist darüber hinaus empfindlich auf eine Änderung der Pulsdichte der Trichel-Pulse (wenn auch darauf optimiert), wie sie auch bei unbeschädigten Behältern auftreten.

Die Kurve für den unbeschädigten Referenz-Behälter (Bezugszeichen A) zeigt in beiden Graphen einen flachen Verlauf, der bis auf einen zusätzlichen Offset (bedingt durch die nahezu konstante Rate der Trichel-Pulse) grob dem Untergrundanteil des Messsignals folgt. Die Kurve für den undichten Behälter (Bezugszeichen B) zeigt den gleichen Untergrund. Dieser wird immer dann von einer deutlich ausgeprägten gaußförmigen Linie überlagert, wenn das Leck den Bereich einer Elektrode passiert. Diese Linien werden im Folgenden als Korrelationslinien bezeichnet.

Die Amplituden dieser Korrelationslinien sind im Bereich der HV-Elektrode 2A besonders groß, aber auch im Bereich der Mess-Elektrode 2B bilden sich klar erkennbare Linien aus. Die Korrelationslinien scheinen den entsprechenden Leck-Pulsen um etwa 5 ms vorauszueilen. Dieser Versatz ist allein durch das numerische Verfahren bedingt und ohne Belang.

Während bei Fig. 7a allein die Korrelation bestimmt wurde, wurde bei Fig. 7b vorher die Signalamplitude auf einen festen Wert limitiert, so dass die Trichel-Pulse mit ihren größeren Amplituden weniger ins Gewicht fallen. Dies erkannt man daran, dass sich die Korrelationslinien durch die Leck-Pulse noch deutlicher vom Untergrund abheben, während die Korrelationslinien, die durch die höhere Dichte an Trichel-Pulsen hervorgerufen werden, schwächer ausfallen. Eine solche Limitierung der Signalamplituden kann via Analyse-Programm (Software) oder durch eine entsprechende Signal-Vorverarbeitung (Hardware) erfolgen.

Trotz der sehr geringen Amplituden der Leck-Pulse (sie sind grob geschätzt um einen Faktor 100 kleiner als bei elektrischen Durchschlägen (Blitzentladungen) übersteigen die Amplituden der Korrelationslinien deutlich das Niveau des Untergrundes. Durch das sehr gute Signal- Rauschverhältnis reicht in diesem Fall eine einfache Grenzbedingung aus, undichte Behälter zu detektieren.

Eine weitere Möglichkeit zu Verbesserung der Messempfindlichkeit besteht darin, die Periodizität des Signals - hervorgerufen durch die Rotation der Produkte (sofern der Einbauort in der Inspektionsmaschine dies erlaubt) - auszunutzen. Aufgrund der fehlenden Totzeit bei Messungen mit Gleichspannung kann jedes Leck - unabhängig von der Rotationsperiode und der HV-Frequenz einer AC-Spannung - aufgezeichnet werden.

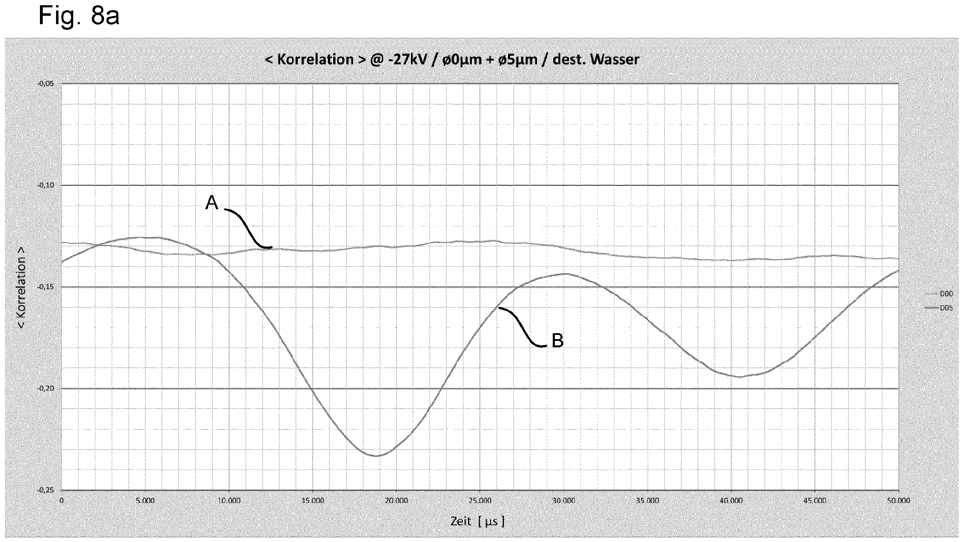

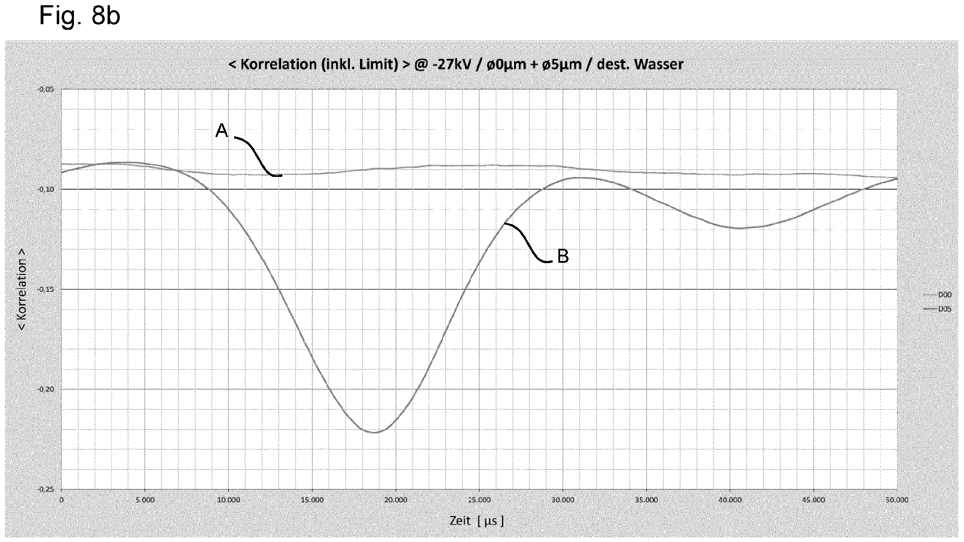

In den Figs. 8a und 8b wurde als einfachste Methode die in Fig. 7a/b dargestellten Korrelationslinien-Spektren über drei Rotationsperioden gemittelt. Der zum Messintervall grob symmetrische Verlauf des Untergrundes wird so weiter zu einem nahezu konstanten Offset geglättet, erkennbar an den Kurven (Bezugszeichen A) für den dichten Behälter. Die Kurve (Bezugszeichen B) für den undichten Behälter zeigt die nun gemittelten Korrelationslinien, bei etwa 19 ms die Passage an der HV-Elektrode, gefolgt bei etwa 41 ms für die Passage an der Messelektrode.

Die Kurven in Fig. 8a wurden ohne, die Kurven in Fig. 8b mit zusätzlicher Amplitudenbegrenzung berechnet. Durch das nochmal verbesserte gute Signal-Rauschverhältnis und den sehr glatten Untergrund reicht wieder eine einfache Grenzbedingung aus, undichte Behälter zu detektieren.

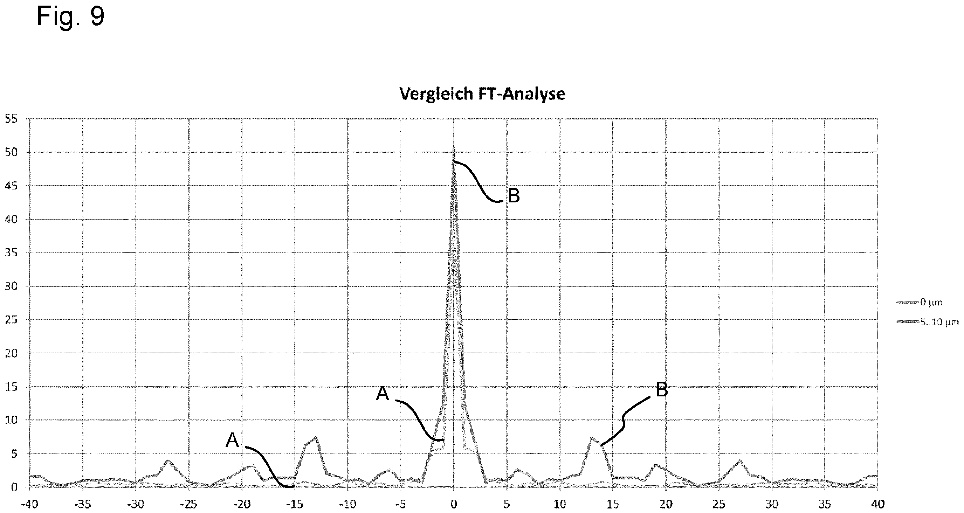

Fig. 9 zeigt einen Vergleich der in den Figuren 6a und 6b erhaltenen Signalverläufe nach einer Fourier-Transformation. Die Periodizität der Leck-Pulse im gemessenen Spektrum erlaubt in vielen Fällen bereits eine sichere Trennung zwischen dichten und undichten Behältern.

Fig. 9 zeigt an einem Beispiel den Unterscheid des Fourier-Spektrums zwischen einem undichten Behälter mit einem Laser-gebohrtem Loch von 10 µm Durchmesser (Bezugszeichen B) und einem dichten Behälter gleichen Typs (Bezugszeichen A) bei gleichen Messbedingungen und destilliertem Wasser als Inhalt.

Auf Grund des im Mittel erhöhten Stroms beim undichten Produkt steigt zwar auch das Maximum für den Gleichstromanteil (Linie bei Abszissenwert 0; Wert für B: 51; Wert für A: 37), wesentlich deutlicher sind aber die relativen Amplitudenunterschiede bei den Abszissenwerten ±13. Diese Abszissenwerte entsprechen der doppelten Rotationsfrequenz des Behälters. Diese Linien zeigen somit den periodisch auftretenden erhöhten Stromfluss auf Grund der Leck-Pulse und der erhöhten Rate an Trichel-Pulsen, bedingt durch das wiederholte Vorbeiziehen der Laser-Bohrung (Undichtigkeit) an den Elektroden.

Zum Nachweis der Effekte im Fourier-Spektrum, wie in Fig. 9 dargestellt, ist aber keine komplette Fourier-Transformation notwendig.

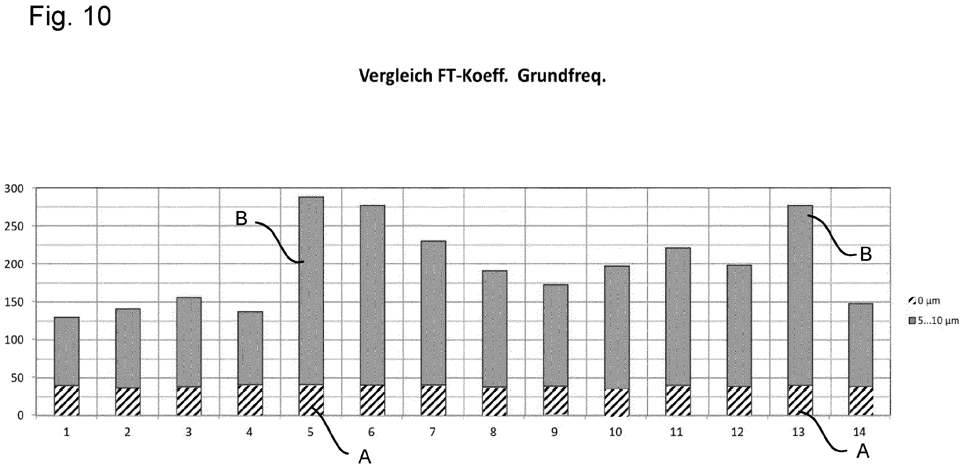

Fig. 10 zeigt als Beispiel die berechneten Beträge der Fourier-Koeffizienten für die doppelte Rotationsfrequenz (der bevorzugen Frequenz für diese Art der Analyse) für eine ganze Serie von Behältern unterschiedlichen Typs mit Löchern von 5 µm und 10 µm (Bezugszeichen B) im Vergleich zu dichten Behältern (Bezugszeichen A; in der Fig. diagonal gestreift dargestellt), gemessen bei unterschiedlichen Rotationsgeschwindigkeiten und auch leicht unterschiedlichen Feldstärken. Alle Behälter waren mit destilliertem Wasser gefüllt. Zwischen dichten und undichten Behältern besteht eine deutliche Lücke, so dass die Unterscheidung über eine einfache Grenzwertanalyse möglich ist.

## Patentansprüche

1. Vorrichtung zur Dichtigkeitsprüfung eines Behälters, umfassend:
eine erste Elektrode,
eine zweite Elektrode, die mit Abstand zu der ersten Elektrode angeordnet ist, so dass zwischen den Elektroden ein Raum zum Anordnen des Behälters vorgesehen ist,
eine Spannungsversorgung, die dazu ausgelegt ist, eine Spannung zwischen der ersten Elektrode und der zweiten Elektrode anzulegen, und
mindestens eine Analyseeinheit, die dazu ausgelegt ist, einen Stromverlauf zu analysieren, der sich bei einem Vorhandensein eines auf seine Dichtigkeit zu prüfenden Behälters zwischen der ersten Elektrode und der zweiten Elektrode einstellt, um auf Grundlage hiervon einen dichten bzw. undichten Behälter zu detektieren,
**dadurch gekennzeichnet, dass**
die Spannungsversorgung dazu ausgelegt ist, eine Gleichspannung zwischen der ersten Elektrode und der zweiten Elektrode anzulegen, vorzugsweise eine Hochspannungs-Gleichspannung, die im Bereich von 500 V bis 50 kV, bevorzugt im Bereich von 5 kV bis 40 kV und ganz besonders bevorzugt im Bereich von 8 kV bis 36 kV liegt.

2. Vorrichtung nach Anspruch 1, wobei zwischen der ersten Elektrode und der zweiten Elektrode in dem Raum zum Anordnen des Behälters eine Vorrichtung zum Rotieren des Behälters um eine Achse vorgesehen ist, damit die mindestens eine Analyseeinheit dazu in der Lage ist, den Stromverlauf während eines Rotierens des Behälters zu analysieren, vorzugsweise während mindestens einer Rotation, insbesondere während mindestens zwei Rotationen des Behälters.

3. Vorrichtung nach einem der vorhergehenden Ansprüche, wobei
die erste Elektrode oder die zweite Elektrode über eine Messimpedanz mit einem der Pole der Spannungsversorgung verbunden ist, wobei vorzugsweise der Pluspol mit der zweiten Elektrode und der Minuspol über die Messimpedanz mit der ersten Elektrode verbunden ist, und/oder
die Spannungsversorgung dazu ausgelegt ist, eine an die erste Elektrode und die zweite Elektrode anzulegende Gleichspannung kontinuierlich beizubehalten, wobei vorzugsweise die Spannungsversorgung dazu ausgelegt ist, die Gleichspannung über die Prüfung der Dichtigkeit des Behälters hinweg kontinuierlich beizubehalten und dabei insbesondere keine weiteren Komponenten zur Variation des zwischen der ersten Elektrode und der zweiten Elektrode erzeugten elektrischen Feldes, beispielsweise Schalter, überlagerte Wechselfelder oder dergleichen, vorhanden sind.

4. Vorrichtung nach einem der vorhergehenden Ansprüche, wobei die erste Elektrode und/oder die zweite Elektrode so ausgebildet ist/sind, dass sich zwischen der ersten Elektrode und der zweiten Elektrode bevorzugt ein inhomogenes elektrisches Feld ausbildet, um bei einem Einfügen eines Behälters zwischen die beiden Elektroden lokale Feldstärken an dem Behälter zu erzeugen, die besonders hohe Werte annehmen.

5. Vorrichtung nach einem der vorhergehenden Ansprüche, wobei die erste Elektrode und/oder die zweite Elektrode in mindestens zwei voneinander getrennte Abschnitte unterteilt ist/sind, um eine Ortsauflösung einer etwaigen Undichtigkeit des Behälters zu erhalten, wobei jede der getrennten Abschnitte über einen separaten Messkanal zu der mindestens einen Analyseeinheit geführt ist, wobei vorzugsweise die in mindestens zwei getrennte Abschnitte unterteilte Elektrode diejenige Elektrode ist, deren Stromverlauf zum Analysieren an die mindestens eine Analyseeinheit geführt ist.

6. Vorrichtung nach einem der vorhergehenden Ansprüche, wobei die mindestens eine Analyseeinheit dazu ausgelegt ist, eines oder mehrere der nachfolgenden Auswerteverfahren gleichzeitig oder nacheinander anzuwenden:
ein Pulszählverfahren, vorzugsweise mit Amplituden- und Pulsweiten-Selektion,
eine Intervall-selektive Integration des Stromsignals, beispielsweise um einen Durchschlagsstrom nachzuweisen,
eine Pulsformanalyse vorzugsweise mithilfe numerischer Verfahren wie der Berechnung der Spektral-Funktion des Stromsignals mithilfe der Fourier-, der Laplace- und/oder der Wavelet-Transformation,
der Faltung mit unterschiedlichen Filterfunktionen,
der Berechnung der Korrelation mit geeigneten Musterfunktionen (inkl. AutoKorrelation), z.B. zur Erkennung von Bursts, die bei korrekt gewählten HV-Spannungen nur bei defekten Produkten auftreten,
eine Regressionsanalyse der Kurvenformen der so gefundenen Korrelation, und/oder
eine Untersuchung der Periodizität der auftretenden Stromänderungen im Takt einer Rotation des Behälters, wobei vorzugsweise eine Berechnung der Fourier-Koeffizienten für die Rotationsfrequenz des Behälters und für eine geeignete Anzahl an ganzen Vielfachen, insbesondere dem Doppelten dieser Frequenz erfolgt und/oder eine Regressionsanalyse erfolgt, die auf einer endlichen Reihe aus harmonischen Schwingungen basiert, deren Frequenzen der Rotationsfrequenz des Behälters sowie einer geeigneten Anzahl ganzer Vielfacher insbesondere dem Doppelten dieser Frequenz entspricht,
und/oder eine Erkennung von irregulären Signalverläufen mithilfe numerischer Verfahren bzw. einer Deep-Learning-Technologie.

7. System zur Dichtigkeitsprüfung mit einer Vorrichtung nach einem der vorhergehenden Ansprüche und einem mit einer Flüssigkeit befüllten Behälter, wobei
der Behälter während einer Prüfung seiner Dichtigkeit so zwischen der ersten Elektrode und der zweiten Elektrode positioniert ist, dass er weder die erste Elektrode noch die zweite Elektrode kontaktiert, vorzugsweise zu jeder der Elektroden einen Abstand von 0,5 mm bis 5mm aufweist.

8. System nach dem vorhergehenden Anspruch 7, ferner mit einer Beförderungseinrichtung, vorzugsweise einem Inspektionskarussell, für den Behälter, die dazu ausgelegt ist, dass die Verweildauer des zu prüfenden Behälters in dem elektrischen Feld, das in dem Raum zwischen der ersten Elektrode und der zweiten Elektrode erzeugbar ist, nicht länger als 1 Sekunde, vorzugsweise nicht länger als 0,5 Sekunden und bevorzugt nicht länger als 0,05 Sekunden ist.

9. System nach einem der vorhergehenden Ansprüche 7 oder 8, wobei der Behälter mit einer Flüssigkeit gefüllt ist, deren Leitfähigkeit bei 20°C im Bereich von 0,5µS/cm bis 20mS/cm, vorzugsweise 2µS/cm bis 10mS/cm, bevorzugt 5µS/cm bis 8mS/cm liegt oder deren Leitfähigkeit bei 20°C im Bereich von weniger als 5µS/cm liegt.

10. System nach einem der vorhergehenden Ansprüche 7-9, wobei der Behälter
großteils aus einem nicht-leitendem oder einem schwach-leitendem Material ist, beispielsweise aus Glas, keramischen Werkstoffen und/oder Kunststoff, und/oder
eine Flasche, ein Vial, eine Ampulle, eine Spritze (inkl. Nadel und Nadelschutz), ein Beutel oder ein Cartridge ist, und/oder eine rotationssymmetrische Form aufweist.

11. Verfahren zur Dichtigkeitsprüfung eines Behälters, vorzugsweise unter Verwendung der Vorrichtung nach einem der vorhergehenden Ansprüche 1-6 oder einem System nach einem der Ansprüche 7-10, wobei in dem Verfahren:
ein Behälter durch ein elektrisches Feld geführt wird, das durch eine erste Elektrode und eine zweite Elektrode unter Anlegen einer Gleichspannung, vorzugsweise einer Hochspannungs-Gleichspannung, die im Bereich von 500 V bis 50 kV, bevorzugt im Bereich von 5 kV bis 40 kV und ganz besonders bevorzugt im Bereich von 8 kV bis 36 kV liegt, gebildet ist,
wobei ein Stromverlauf an der ersten Elektrode und/oder der zweiten Elektrode analysiert wird, um auf eine Dichtigkeit des Behältnisses zu schließen, und
der Behälter, während er sich in dem elektrischen Feld befindet, um seine Rotationsachse rotiert wird, beispielsweise mit einer Rotationsgeschwindigkeit im Bereich von 200-6000 Umdrehungen/min, vorzugsweise 500-3000 Umdrehungen/min und bevorzugt 600-2000 Umdrehungen/min.

12. Verfahren nach dem vorhergehenden Anspruch 11, wobei bei der Analyse des Behälters auf eine etwaige vorliegende Undichtigkeit auf mindestens ein charakteristisches Muster im Stromverlauf abgestellt wird, um eine Undichtigkeit in dem untersuchten Behälter zu detektieren.

13. Verfahren nach einem der vorhergehenden Ansprüche 11 oder 12, wobei bei der Analyse des Behälters auf eine etwaige vorliegende Undichtigkeit die oberhalb eines Schwellenwerts liegenden Pulse im Stromverlauf betrachtet werden, um anhand hiervon die Dichtigkeit des Behälters beurteilen zu können, wobei vorzugsweise
eine erhöhte Pulsrate im Stromverlauf entsprechend der Periodizität der Rotation des Behälters ein Hinweis auf eine Undichtigkeit im Behälter ist, und/oder
ein entsprechend der Periodizität der Rotation des Behälters vorübergehendes Ausbleiben der Pulse im Stromverlauf ein Hinweis auf eine Undichtigkeit im Behälter ist.

14. Verfahren nach einem der vorhergehenden Ansprüche 11 bis 13, wobei bei der Analyse des Behälters
eine Korrelation des aktuell zu analysierende Stromverlaufs zu einem typischen Stromverlauf ohne Undichtigkeit und/oder mit Undichtigkeit berechnet wird, um anhand hiervon auf eine Undichtigkeit in dem aktuell untersuchten Behälter schließen zu können, und/oder
auf entsprechend der Periodizität der Rotation des Behälters auftretende Abweichungen im Stromverlauf abgestellt wird, die vorzugsweise über mindestens zwei Rotationsperioden auftreten.

15. Verfahren nach einem der vorhergehenden Ansprüche 11 bis 14, wobei bei der Analyse des Behälters
der Stromverlauf in das Fourier-Spektrum überführt wird, wobei vorzugsweise bei Überschreiten eines Schwellenwerts einer Amplitude im Bereich der einfachen und doppelten Rotationsfrequenz des Behälters auf eine Undichtigkeit des Behälters geschlossen wird, und/oder
die Beiträge der Fourier-Koeffizienten für die doppelte Rotationsfrequenz des Behälters und/oder eines ganzzahligen Vielfachen davon berechnet werden und bei Überschreiten eines Schwellenwerts der Beiträge an diesen Stellen auf einen undichten Behälter geschlossen wird.
